# EUROPEAN PATENT SPECIFICATION

(11) **EP 3 153 989 B1**
(45) Date of publication and mention of the grant of the patent: **31.03.2021**
(21) Application number: 16157436.3
(22) Date of filing: 25.02.2016
(51) Int. Cl.: G06K 9/32, G06K 9/00

(54) **FINGERPRINT RECOGNITION METHOD AND APPARATUS, COMPUTER PROGRAM AND RECORDING MEDIUM**
FINGERABDRUCKERKENNUNGSVERFAHREN UND VORRICHTUNG, COMPUTERPROGRAMM UND AUFZEICHNUNGSMEDIUM
PROCÉDÉ ET APPAREIL DE RECONNAISSANCE D'EMPREINTES DIGITALES, PROGRAMME INFORMATIQUE ET SUPPORT D'ENREGISTREMENT

(30) Priority: 09.10.2015 CN 201510649735
(43) Date of publication of application: 12.04.2017
(73) Proprietor: Xiaomi Inc., Beijing 100085 (CN)
(72) Inventor: LI, Guosheng, 100085 Haidian District (CN); JIANG, Zhongsheng, 100085 Haidian District (CN); LIU, Shanrong, 100085 Haidian District (CN)
(74) Representative: Sadler, Peter Frederick

(56) References cited:
- US-A1- 2006 017 709
- US-A1- 2010 134 442
- US-A1- 2012 275 669
- US-A1- 2014 192 023

## Description

### TECHNICAL FIELD

The present disclosure relates to the field of a liquid crystal display screen, in particular to a fingerprint recognition method and apparatus, a computer program and a recording medium.

### BACKGROUND

Fingerprint recognition sensors arranged in an electronic device can recognize fingerprints of a user, and perform verification on the fingerprints of the user. After successful verification, the user is allowed to operate the electronic device, thus avoiding the operation of the electronic device by a stranger, and ensuring safety of the electronic device.

When the fingerprint recognition sensors are uniformly distributed on a liquid crystal display screen of the electronic device, a fingerprint recognition method provided in related arts comprises: detecting whether an operation acting on the liquid crystal display screen is received by the electronic device, when receiving the operation acting on the liquid crystal display screen, scanning row by row from a first row of fingerprint recognition sensors in the liquid crystal display screen until the last row of fingerprint recognition sensors in the liquid crystal display screen are scanned, thus obtaining the fingerprints of the user.

However, the above fingerprint recognition method performs fingerprint recognition using all the fingerprint recognition sensors on the whole liquid crystal display screen, so the fingerprint recognition efficiency is low.

US patent application 2012/0275669A1 provides an adaptive and intelligent fingerprint scanning device and approach. Specifically, DC resistive image scanning is used to reduce overall scanning time and energy consumption (e.g., by identifying a targeted scanning area). In a typical embodiment, a scanning device would be provided that includes a scanning area comprised of a set of imaging pixel electrodes. As a user presses his/her finger against the scanning area, a first portion of the finger will contact a first electrode while a second portion of the finger will contact a second electrode. When this occurs, a voltage source of the device will apply an initial voltage across the first and second finger portions. A meter of the device will take an electrical measurement (e.g., resistance and/or charged skin voltage) across the two finger portions. Based on the electrical measurement, a location of the finger on the device will be identified, and the fingerprint will be scanned accordingly. Thus, the entire scanning surface need not be scanned, only the portions thereof where the finger was detected.

US patent application 2006/0017709A1 provides a touch panel apparatus which includes a touch panel provided on a display; a touch-area detecting unit that detects a touch area when an object touches on a surface of the touch panel; and a determining unit that compares, when the touch-area detecting unit detects two touch areas, dimensions of the two touch areas, validates a touch area having a smaller dimension, and invalidates a touch area having a larger dimension. Dimensions of the touch area are determined by light emitting units and light receiving units.

US patent application 2014/0192023A1 provides a system and method for hover detection and touch detection in a display. In one embodiment, a first set of infrared (IR) emitters illuminates the interior of a transparent layer and the IR light is confined to the interior of the layer by total internal reflection, unless an object, such as a finger, touches the surface of the layer. Additional IR emitters at a different wavelength illuminate the volume outside of the display for hover detection. Two sets of wavelength-selective IR sensors, such as quantum dot sensors, are embedded in the display and are used to localize one or more fingers touching, or hovering near, the display.

### SUMMARY

The invention is defined by the independent claims to which reference is now made. Advantageous features are set out in the dependent claims.

To solve problems in the related arts, the present disclosure discloses a fingerprint recognition method and apparatus, a computer program and a recording medium.

According to a first aspect of embodiments of the present disclosure, there is provided a fingerprint recognition method, used in an electronic device comprising a liquid crystal display screen on which fingerprint recognition sensors and light sensors are distributed, and the method comprises:
acquiring a fingerprint recognition command triggered by fingers of a user;
determining a shielding region consisting of positions of respective light sensors shielded by the fingers after receiving the fingerprint recognition command;
selecting a subgroup, or portion, of the fingerprint recognition sensors according to the shielding region; and
controlling the selected subgroup of fingerprint recognition sensors to recognize fingerprints of the fingers.

The determining a shielding region consisting of positions of respective light sensors shielded by the fingers after receiving the fingerprint recognition command comprises:
determining respective light sensors of which measured brightness values are smaller than a preset threshold value after receiving the fingerprint recognition command; and
determining a region consisting of the positions of respective light sensors as the shielding region.

Optionally, the method further comprises:
detecting whether the light sensors are shielded by the fingers according to the shielding region; and
triggering to execute the step of selecting a subgroup of the fingerprint recognition sensors according to the shielding region when detecting that the light sensors are shielded by the fingers according to the shielding region.

Optionally, the selecting a subgroup of the fingerprint recognition sensors according to the shielding region comprises:
determining respective fingerprint recognition sensors distributed in the shielding region; or,
determining a column number and a row number covered by the shielding region when the fingerprint recognition sensors are in array distribution on the display screen, generating a rectangular recognition region by taking the column number as length and the row number as width, and determining respective fingerprint recognition sensors distributed in the recognition region.

Optionally, the controlling the selected subgroup of fingerprint recognition sensors to recognize fingerprints of the fingers comprises:
controlling the subgroup of fingerprint recognition sensors to be electrically connected with corresponding data lines; and
outputting fingerprint data collected by the subgroup of fingerprint recognition sensors by the data lines.

Optionally, the controlling the subgroup of fingerprint recognition sensors to be electrically connected with corresponding data lines comprises:
initializing all fingerprint recognition sensors, and controlling the subgroup of fingerprint recognition sensors to be electrically connected with corresponding data lines by enabling lines, wherein each fingerprint recognition sensor is electrically connected with a corresponding enabling line.

According to a second aspect of embodiments of the present disclosure, there is provided a fingerprint recognition apparatus, used in an electronic device comprising a liquid crystal display screen on which fingerprint recognition sensors and light sensors are distributed, and the apparatus comprises:
a command receiving module configured to acquire a fingerprint recognition command triggered by fingers of a user;
a region determining module configured to determine a shielding region consisting of positions of respective light sensors shielded by the fingers after the command receiving module receives the fingerprint recognition command;
a sensor selecting module configured to select a subgroup of the fingerprint recognition sensors according to the shielding region determined by the region determining module; and
a fingerprint recognition module configured to control the selected subgroup of fingerprint recognition sensors selected by the sensor selecting module to recognize fingerprints of the fingers.

The region determining module includes:
a first determining sub-module configured to determine respective light sensors of which measured brightness values are smaller than a preset threshold value after receiving the fingerprint recognition command; and
a second determining sub-module configured to determine a region consisting of the positions of respective light sensors as the shielding region.

Optionally, the apparatus further comprises:
a region detecting module configured to detect whether the light sensors are shielded by the fingers according to the shielding region; and
an operation triggering module configured to trigger to execute the step of selecting a subgroup of the fingerprint recognition sensors according to the shielding region when the region detecting module detects that the light sensors are shielded by the fingers according to the shielding region.

Optionally, the sensor selecting module includes:
a first selecting sub-module configured to determine respective fingerprint recognition sensors distributed in the shielding region; or,
a second selecting sub-module configured to determine a column number and a row number covered by the shielding region when the fingerprint recognition sensors are in array distribution on the display screen, generate a rectangular recognition region by taking the column number as length and the row number as width, and determine respective fingerprint recognition sensors distributed in the recognition region.

Optionally, the fingerprint recognition module includes:
a connecting control sub-module configured to control the subgroup of fingerprint recognition sensors to be electrically connected with corresponding data lines; and
a fingerprint output sub-module configured to output fingerprint data collected by the subgroup of fingerprint recognition sensors by the data lines.

Optionally, the connecting control sub-module is further configured to:
initialize all fingerprint recognition sensors, and control the subgroup of fingerprint recognition sensors to be electrically connected with corresponding data lines by enabling lines, wherein each fingerprint recognition sensor is electrically connected with a corresponding enabling line.

According to a third aspect of embodiments of the present disclosure, there is provided a fingerprint recognition apparatus, comprising:
a liquid crystal display screen on which fingerprint recognition sensors and light sensors are distributed;
a processor; and
a memory for storing a command executable by the processor,
wherein, the processor is configured to perform any of the methods of the first aspect.

Optionally, the display may be a liquid crystal display.

In one particular embodiment, the steps of the fingerprint recognition method are determined by computer program instructions.

Consequently, according to a fourth aspect, the invention is also directed to a computer program for executing the steps of a fingerprint recognition method as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solutions of the embodiments of this disclosure have following beneficial effects: a fingerprint recognition command triggered by fingers of a user is acquired; a shielding region consisting of positions of respective light sensors shielded by the fingers is determined after the fingerprint recognition command is received; a subgroup of the fingerprint recognition sensors are selected according to the shielding region; and the selected subgroup of fingerprint recognition sensors are controlled to recognize fingerprints of the fingers, the subgroup of fingerprint recognition sensors can be controlled to recognize fingerprints, thus solving the problem of resource waste caused by the fact that all fingerprint recognition sensors on the whole display screen arc controlled to recognize fingerprints, and achieving a resource saving effect.

It should be understood that both the foregoing general description and the following detailed description are only exemplary and explanatory and are not restrictive of the invention.

### BRIEF DESCRIPTION OF THE DRAWINGS

The accompanying drawings, which arc incorporated in and constitute a part of this specification, illustrate embodiments consistent with the invention and, together with the description, serve to explain the principles of the invention.
Fig. 1 is a flow chart showing a fingerprint recognition method according to an exemplary embodiment.
Fig. 2A is a flow chart showing a fingerprint recognition method according to another exemplary embodiment.
Fig. 2B is a schematic diagram showing a shielding region according to another exemplary embodiment.
FIG. 2C is a schematic diagram showing a recognition region according to another exemplary embodiment.
FIG. 2D is a flow chart showing controlling a subgroup of fingerprint recognition sensors to recognize fingerprints according to another exemplary embodiment.
FIG. 2E is a first schematic diagram showing fingerprint recognition sensors according to another exemplary embodiment.
FIG. 2F is a second schematic diagram showing fingerprint recognition sensors according to another exemplary embodiment.
FIG. 3 is a block diagram showing a fingerprint recognition apparatus according to an exemplary embodiment.
FIG. 4 is a block diagram showing a fingerprint recognition apparatus according to an exemplary embodiment.
FIG. 5 is a block diagram showing an apparatus for fingerprint recognition according to an exemplary embodiment.

### DETAILED DESCRIPTION

Reference will now be made in detail to exemplary embodiments, examples of which arc illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

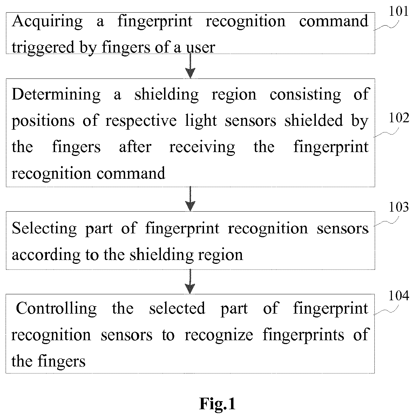

Fig. 1 is a flow chart showing a fingerprint recognition method according to an exemplary embodiment, the fingerprint recognition method is used in an electronic device comprising a liquid crystal display screen on which fingerprint recognition sensors and light sensors are distributed, and as shown in FIG. 1, the fingerprint recognition method comprises following steps:
in step 101, acquiring a fingerprint recognition command triggered by fingers of a user;
in step 102, determining a shielding region consisting of positions of respective light sensors shielded by the fingers after receiving the fingerprint recognition command;
in step 103, selecting a subgroup or portion of the fingerprint recognition sensors according to the shielding region, being fewer sensors than the total number of fingerprint recognition sensors distributed on the liquid crystal display screen; and
in step 104, controlling the selected subgroup of fingerprint recognition sensors to recognize fingerprints of the fingers.

To sum up, according to the fingerprint recognition method provided in the present disclosure, a fingerprint recognition command triggered by fingers of a user is acquired; a shielding region consisting of positions of respective light sensors shielded by the fingers is determined after the fingerprint recognition command is received; a subgroup of fingerprint recognition sensors are selected according to the shielding region; and the selected subgroup of fingerprint recognition sensors are controlled to recognize fingerprints of the fingers, the subgroup of fingerprint recognition sensors may be controlled to recognize fingerprints, thus solving the problem of resource waste caused by the fact that all fingerprint recognition sensors on the whole liquid crystal display screen are controlled to recognize fingerprints, and achieving a resource saving effect.

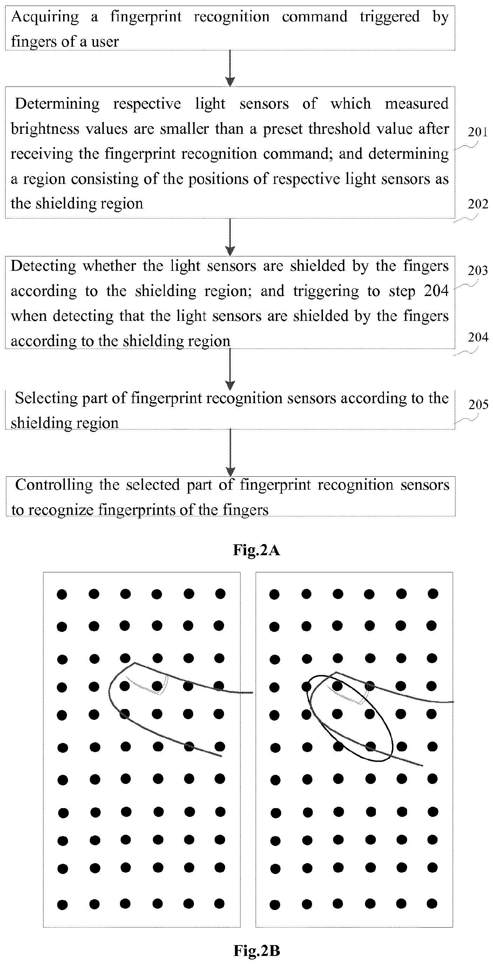

Fig. 2A is a flow chart showing a fingerprint recognition method according to another exemplary embodiment, the fingerprint recognition method is used in an electronic device comprising a liquid crystal display screen on which fingerprint recognition sensors and light sensors are distributed, and as shown in FIG. 2A, the fingerprint recognition method comprises following steps:
In step 201, acquiring a fingerprint recognition command triggered by fingers of a user.

The fingerprint recognition command is configured to indicate an electronic device to start a fingerprint recognition service to recognize fingerprints. The fingerprint recognition command may be generated by controlling an application program with fingers in a process of using the application program by a user, and then acquired by the electronic device; the fingerprint recognition command also can be acquired by the electronic device through other manners. The present embodiment does not limit an acquiring manner of the fingerprint recognition command.

In step 202, determining respective light sensors of which measured brightness values are smaller than a preset threshold value after receiving the fingerprint recognition command; and determining a region consisting of the positions of respective light sensors as the shielding region.

After the fingerprint recognition command is received, the user needs to trigger a touch operation on a liquid crystal display screen with fingers to facilitate the electronic device to recognize fingerprints. When fingers of the user contact the liquid crystal display screen, the fingers will shield ambient light transmitted to the light sensors, at the moment, brightness values of the ambient light measured by the light sensors are smaller, therefore, the electronic device can determine whether the fingers contact the liquid crystal display screen according to brightness values measured by respective light sensors. During implementation, the electronic device can acquire the brightness values acquired by all light sensors, and compare respective brightness values with a preset threshold value, and when a certain brightness valve is smaller than the preset threshold value, it is indicated that the light sensor is shielded and the fingers contact the liquid crystal display screen.

In the present embodiment, the electronic device can determine positions of respective light sensors of which the brightness values are smaller than the preset threshold value, and takes a region consisting of respective positions as a shielding region. Please refer to a schematic diagram of the shielding region as shown in FIG. 2B, wherein, black dots distributed on the liquid crystal display screen represent the light sensors, a left side view in FIG. 2B represents that the fingers of the user trigger a touch operation on the liquid crystal display screen, and a right side view in FIG. 2B represents an oval shielding region of the touch operation.

In step 203, detecting whether the light sensors arc shielded by the fingers according to the shielding region; and proceeding to step 204 when detecting that the light sensors are shielded by the fingers according to the shielding region.

Since the touch operation may be triggered by the fingers of the user, or by other parts such as a palm of the user, the electronic device needs to exclude the touch operation triggered by the other parts, thus avoiding resource waste caused by starting of a fingerprint recognition service for fingerprint recognition.

During implementation, the electronic device can compute an area of the shielding region, and detects whether the area is smaller than a preset area threshold value, when the area is smaller than the preset area threshold value, it is determined that the touch operation is triggered by fingers; when the area is larger than the preset area threshold value, it is determined that the touch operation is not triggered by the fingers. Or, the electronic device can detect whether the shape of the shielding region is oval, when the shape is oval, it is determined that the touch operation is triggered by fingers; when the shape is not oval, it is determined that the touch operation is not triggered by the fingers. Of course, the electronic device can detect whether the touch operation is triggered by the fingers by other manners, which is not limited in the present embodiment;
In step 204, selecting a subgroup of the fingerprint recognition sensors according to the shielding region.

Since the contact region between the fingers and the liquid crystal display screen is the shielding region, and the electronic device needs to recognize fingerprints of the fingers, the electronic device can select a subgroup of the fingerprint recognition sensors according to the shielding region to recognize the fingerprints, thus solving the problem of resource waste caused by the fact that all fingerprint recognition sensors on the whole liquid crystal display screen are controlled to recognize fingerprints, and achieving a resource saving effect,
Wherein, the present embodiment provides two methods for selecting a subgroup of the fingerprint recognition sensors according to a shielding region, which are respectively described hereinafter.

In the first determining method, determining respective fingerprint recognition sensors distributed in the shielding region.

Wherein, the electronic device can control respective fingerprint recognition sensors distributed in the shielding region to recognize the fingerprints. At the moment, the electronic device can acquire coordinates of respective fingerprint recognition sensors on a liquid crystal display screen, and then determine respective fingerprint recognition sensors distributed in the shielding region according to the coordinates.

In the second determining method, determining a column number and a row number covered by the shielding region when the fingerprint recognition sensors are in array distribution on the liquid crystal display screen, generating a rectangular recognition region by taking the column number as length and the row number as width, and determining respective fingerprint recognition sensors distributed in the recognition region.

The shape of the shielding region may be irregular, and the electronic device has larger calculated amount when determining the fingerprint recognition sensors distributed in the recognition region, therefore, the electronic device can determine a recognition region containing the shielding region in a regular shape, and then acquire coordinates of respective fingerprint recognition sensors on the liquid crystal display screen, and determines respective fingerprint recognition sensors distributed in the shielding region according to the coordinates.

Wherein, when the fingerprint recognition sensors arc in array distribution on the liquid crystal display screen, the recognition region may be a rectangular region, since the length and width of the rectangular region are fixed, the electronic device can determine respective fingerprint recognition sensors distributed in the recognition region very easily.

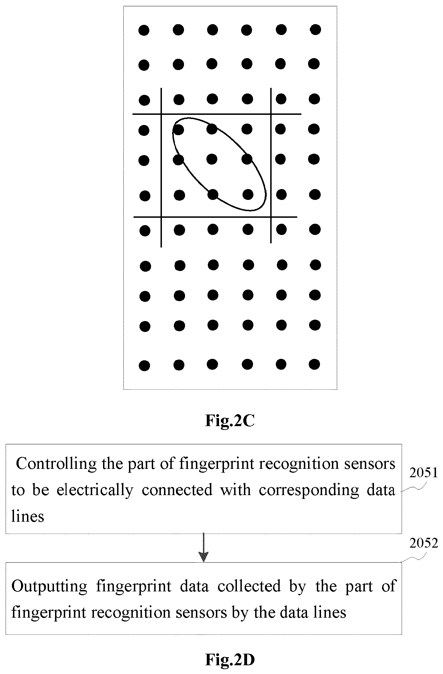

Please refer to a schematic diagram of a recognition region as shown in FIG. 2C, wherein, black dots distributed on the liquid crystal display screen represent fingerprint recognition sensors, the oval region is the shielding region, then the fingerprint recognition sensors distributed in the shielding region are second-third fingerprint recognition sensors in the fourth row, second-fourth fingerprint recognition sensors in the fifth row, and third-fourth fingerprint recognition sensors in the sixth row. The recognition region determined by the oval region is a rectangular region, and then the fingerprint recognition sensors distributed in the rectangular region are second-fourth fingerprint recognition sensors in the fourth-sixth rows.

In step 205, controlling the selected subgroup of the fingerprint recognition sensors to recognize fingerprints of the fingers.

Please refer to a flow chart showing controlling the subgroup of fingerprint recognition sensors to recognize fingerprints of the fingers as shown in FIG. 2D, controlling the selected subgroup of fingerprint recognition sensors to recognize fingerprints of the fingers comprises:
in step 2051, controlling the subgroup of fingerprint recognition sensors to be electrically connected with corresponding data lines; and
in step 2052, outputting fingerprint data collected by the subgroup of fingerprint recognition sensors by the data lines.

After the fingerprint recognition sensors are determined, the electronic device needs to start these fingerprint recognition sensors, so as to recognize fingerprints through these fingerprint recognition sensors, wherein, starting the fingerprint recognition sensors comprises initializing the fingerprint recognition sensors and controlling the fingerprint recognition sensors to be electrically connected with data lines by enabling ends.

During implementation, controlling the subgroup of fingerprint recognition sensors to be electrically connected with corresponding data lines comprises: initializing all fingerprint recognition sensors, and controlling the subgroup of fingerprint recognition sensors to be electrically connected with corresponding data lines by enabling lines, wherein each fingerprint recognition sensor is electrically connected with a corresponding enabling line.

Initializing all fingerprint recognition sensors comprises starting a fingerprint recognition service, controlling all fingerprint recognition sensors to be in an idle state and to wait for a scanning command, wherein the enabling end of each fingerprint recognition sensor is electrically connected with the corresponding enabling line, whether the fingerprint recognition sensors are electrically connected with the data lines is controlled by signals transmitted on the enabling lines, and the data lines are used for transmitting collected fingerprint data .

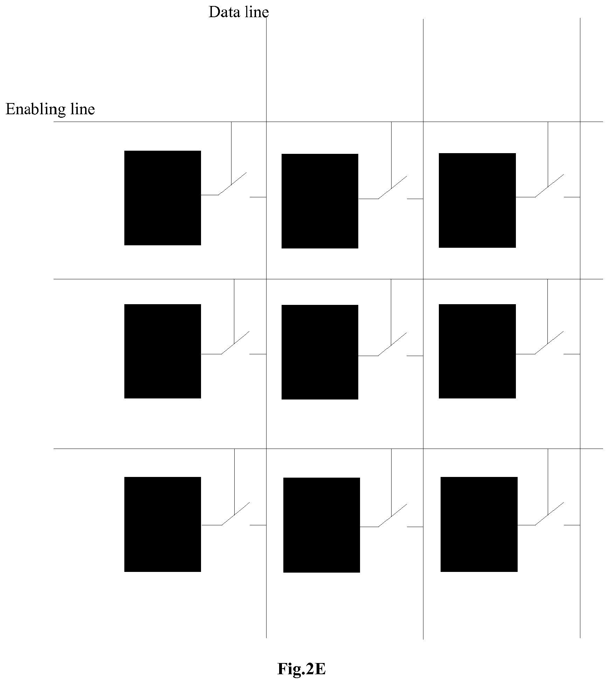

Please refer to a first schematic diagram of fingerprint recognition sensors as shown in FIG. 2E, wherein, the black rectangles are fingerprint recognition sensors, transverse lines are enabling lines, vertical lines are data lines, and each fingerprint recognition sensor is connected to a corresponding data line by one switch and is not connected with the data line.

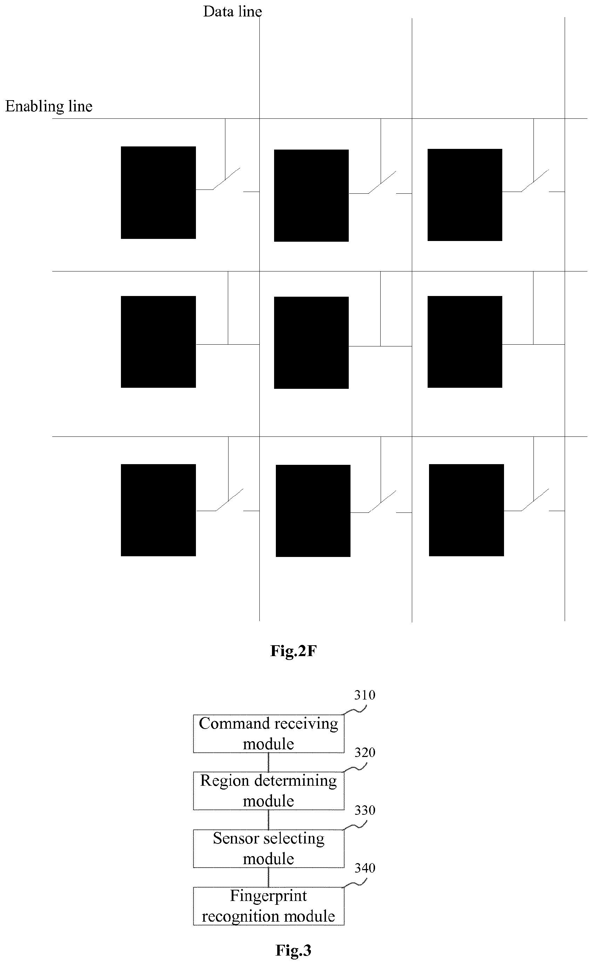

Please refer to a second schematic diagram of fingerprint recognition sensors as shown in FIG. 2F, it is assumed that the electronic device needs to control the fingerprint recognition sensors in the second row to recognize fingerprints, then respective fingerprint recognition sensors in the second row can be controlled to be electrically connected with the data lines by signals transmitted on the enabling lines.

After the fingerprint recognition sensors are electrically connected with the data lines, the electronic device controls these fingerprint recognition sensors to scan by a scanning command to obtain fingerprint data, and transmits these data by the data lines for fingerprint recognition treatment, wherein, when the fingerprint recognition sensors arc capacitance type fingerprint recognition sensors, the fingerprint data are capacitance values.

It needs to be indicated that the step of initializing the fingerprint recognition sensors can be executed at the earliest after step 201, thus causing the electronic device to directly recognize the fingerprints by the fingerprint recognition sensors in an idle state after determining the fingerprint recognition sensors, and improving the fingerprint recognition efficiency; or the step can be executed at latest after the electronic device determines the fingerprint recognition sensors to be subject to fingerprint recognition, thus saving the resource waste caused by too early starting of a fingerprint recognition service.

In conclusion, according to the fingerprint recognition method provided in the present disclosure, a fingerprint recognition command triggered by fingers of a user is acquired; a shielding region consisting of positions of respective light sensors shielded by the fingers is determined after the fingerprint recognition command is received; a subgroup of fingerprint recognition sensors are selected according to the shielding region; and the selected subgroup of fingerprint recognition sensors are controlled to recognize fingerprints of the fingers, the subgroup of fingerprint recognition sensors may be controlled to recognize fingerprints, thus solving the problem of resource waste caused by the fact that all fingerprint recognition sensors on the whole liquid crystal display screen are controlled to recognize fingerprints, and achieving a resource saving effect.

In addition, respective light sensors with measured brightness values being smaller than a preset threshold value are determined, a region consisting of the positions of respective light sensors is determined as a shielding region, contact between fingers and a liquid crystal display screen can be determined by the light sensors firstly, and then a fingerprint recognition service is started, thus avoiding the problem of resource waste caused by too early starting of the fingerprint recognition service, and achieving a resource saving effect.

FIG. 3 is a block diagram showing a fingerprint recognition apparatus according to an exemplary embodiment, the fingerprint recognition apparatus is used in an electronic device comprising a liquid crystal display screen on which fingerprint recognition sensors and light sensors are distributed, and as shown in FIG. 3, the apparatus comprises: a command receiving module 310, a region determining module 320, a sensor selecting module 330 and a fingerprint recognition module 340.

The command receiving module 310 is configured to acquire a fingerprint recognition command triggered by fingers of a user.

The region determining module 320 is configured to determine a shielding region consisting of positions of respective light sensors shielded by the fingers after the command receiving module 310 receives the fingerprint recognition command.

The sensor selecting module 330 is configured to select a subgroup of fingerprint recognition sensors according to the shielding region determined by the region determining module 320.

The fingerprint recognition module 340 is configured to control the subgroup of fingerprint recognition sensors selected by the sensor selecting module 330 to recognize fingerprints of fingers.

In conclusion, according to the fingerprint recognition apparatus provided in the present disclosure, a fingerprint recognition command triggered by fingers of a user is acquired; a shielding region consisting of positions of respective light sensors shielded by the fingers is determined after the fingerprint recognition command is received; a subgroup of fingerprint recognition sensors are selected according to the shielding region; and the selected subgroup of fingerprint recognition sensors are controlled to recognize fingerprints of fingers, the subgroup of fingerprint recognition sensors may be controlled to recognize fingerprints, thus solving the problem of resource waste caused by the fact that all fingerprint recognition sensors on the whole liquid crystal display screen are controlled to recognize fingerprints, and achieving a resource saving effect.

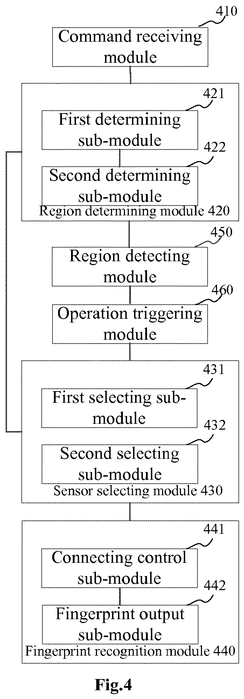

FIG. 4 is a block diagram showing a fingerprint recognition apparatus according to an exemplary embodiment, the fingerprint recognition apparatus is used in an electronic device comprising a liquid crystal display screen on which fingerprint recognition sensors and light sensors arc distributed, and as shown in FIG. 4, the fingerprint recognition apparatus comprises: a command receiving module 410, a region determining module 420, a sensor selecting module 430 and a fingerprint recognition module 440.

The command receiving module 410 is configured to acquire a fingerprint recognition command triggered by fingers of a user.

The region determining module 420 is configured to determine a shielding region consisting of positions of respective light sensors shielded by the fingers after the command receiving module 410 receives the fingerprint recognition command.

The sensor selecting module 430 is configured to select a subgroup of fingerprint recognition sensors according to the shielding region determined by the region determining module 420.

The fingerprint recognition module 440 is configured to control the subgroup of fingerprint recognition sensors selected by the sensor selecting module 430 to recognize fingerprints of fingers.

Optionally, the region determining module 420 includes: a first determining sub-module 421 and a second determining sub-module 422.

The first determining sub-module 421 is configured to determine respective light sensors of which measured brightness values are smaller than a preset threshold value after receiving the fingerprint recognition command.

The second determining sub-module 422 is configured to determine a region consisting of the positions of respective light sensors as the shielding region.

Optionally, the fingerprint recognition apparatus provided in the present embodiment further comprises: a region detecting module 450 and an operation triggering module 460.

The region detecting module 450 is configured to detect whether the light sensors are shielded by the fingers according to the shielding region.

The operation triggering module 460 is configured to trigger to execute the step of controlling the selected subgroup of fingerprint recognition sensors to recognize the fingerprint when the region detecting module 450 detects that the light sensors are shielded by the fingers according to the shielding region.

Optionally, the sensor selecting module 430 includes:
a first selecting sub-module 431 configured to determine respective fingerprint recognition sensors distributed in the shielding region; or,
a second selecting sub-module 432 configured to determine a column number and a row number covered by the shielding region when the fingerprint recognition sensors are in array distribution on the liquid crystal display screen, generate a rectangular recognition region by taking the column number as length and the row number as width, and determine respective fingerprint recognition sensors distributed in the recognition region.

Optionally, the fingerprint recognition module 440 includes: a connecting control sub-module 441 and a fingerprint output sub-module 442.

The connecting control sub-module 441 is configured to control the subgroup of fingerprint recognition sensors to be electrically connected with corresponding data lines.

The fingerprint output sub-module 442 is configured to output fingerprint data collected by the subgroup of fingerprint recognition sensors by the data lines.

Optionally, the connecting control sub-module 441 is further configured to:
initialize all fingerprint recognition sensors, and control the subgroup of fingerprint recognition sensors to be electrically connected with corresponding data lines by enabling lines, wherein each fingerprint recognition sensor is electrically connected with a corresponding enabling line.

In conclusion, according to the fingerprint recognition apparatus provided in the present disclosure, a fingerprint recognition command triggered by fingers of a user is acquired; a shielding region consisting of positions of respective light sensors shielded by the fingers is determined after the fingerprint recognition command is received; a subgroup of fingerprint recognition sensors are selected according to the shielding region; and the selected subgroup of fingerprint recognition sensors are controlled to recognize fingerprints of the fingers, the subgroup of fingerprint recognition sensors may be controlled to recognize fingerprints, thus solving the problem of resource waste caused by the fact that all fingerprint recognition sensors on the whole liquid crystal display screen are controlled to recognize fingerprints, and achieving a resource saving effect.

In addition, respective light sensors with measured brightness values being smaller than a preset threshold value are determined, a region consisting of the positions of respective light sensors is determined as a shielding region, contact between fingers and a liquid crystal display screen can be determined by the light sensors firstly, and then a fingerprint recognition service is started, thus avoiding the problem of resource waste caused by too early starting of the fingerprint recognition service, and achieving a resource saving effect.

With respect to the apparatus in above embodiments, specific operation executing manners of respective modules have been described in detail in the embodiments related to the method, and are not repeated in detail herein.

An exemplary embodiment of this disclosure provides a fingerprint recognition apparatus, capable of realizing the fingerprint recognition method provided in the present disclosure, the fingerprint recognition apparatus is used in an electronic device and comprises a liquid crystal displays screen on which fingerprint recognition sensors and light sensors are distributed, a processor, and a memory for storing a command executable by the processor,
wherein, the processor is configured to:
acquire a fingerprint recognition command triggered by fingers of a user;
determine a shielding region consisting of positions of respective light sensors shielded by the fingers after receiving the fingerprint recognition command;
select a subgroup of fingerprint recognition sensors according to the shielding region; and
control the selected subgroup of fingerprint recognition sensors to recognize fingerprints of the fingers.

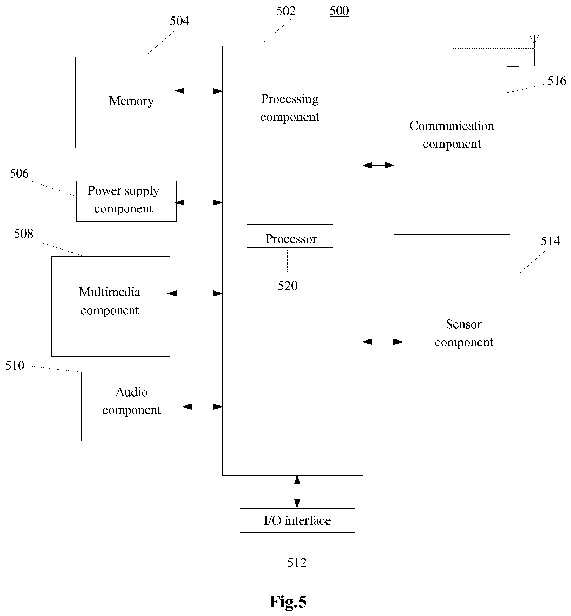

FIG. 5 is a block diagram showing an apparatus 500 for fingerprint recognition according to an exemplary embodiment. For example, the apparatus 500 may be a mobile phone, a computer, a digital broadcast terminal, a messaging device, a game console, a panel device, a medical device, a fitness equipment, a personal digital assistant or the like.

With reference to FIG. 5, the apparatus 500 may comprise one or more of following components: a processing component 502, a memory 504, a power supply component 506, a multimedia component 508, an audio component 510, an input/output (I/O) interface 512, a sensor component 514, and a communication component 516.

The processing component 502 typically controls overall operations of the apparatus 500, such as the operations associated with display, telephone calls, data communications, camera operations, and recording operations. The processing component 502 may include one or more processors 518 to execute instructions to perform all or part of the steps in the above described methods. Moreover, the processing component 502 may include one or more modules which facilitate the interaction between the processing component 502 and other components. For instance, the processing component 502 may include a multimedia module to facilitate the interaction between the multimedia component 508 and the processing component 502.

The memory 504 is configured to store various types of data to support the operation of the apparatus 500. Examples of such data include instructions for any applications or methods operated on the apparatus 500, contact data, phonebook data, messages, pictures, video, etc. The memory 504 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power supply component 506 provides power to various components of the apparatus 500. The power supply component 506 may include a power supply management system, one or more power sources, and any other components associated with the generation, management, and distribution of power in the apparatus 500.

The multimedia component 508 includes a screen providing an output interface between the apparatus 500 and the user. In some embodiments, the screen may include a liquid crystal display (LCD) and a touch panel (TP). If the screen includes the touch panel, the screen may be implemented as a liquid crystal display screen to receive input signals from the user. The touch panel includes one or more touch sensors to sense touches, swipes, and gestures on the touch panel. The touch sensors may not only sense a boundary of a touch or swipe action, but also detect a period of time and a pressure associated with the touch or swipe action. In some embodiments, the multimedia component 508 includes a front camera and/or a rear camera. The front camera and/or the rear camera may receive external multimedia data while the apparatus 500 is in an operation mode, such as a photographing mode or a video mode. Each of the front camera and the rear camera may be a fixed optical lens system or have focus and optical zoom capability.

The audio component 510 is configured to output and/or input audio signals. For example, the audio component 510 includes a microphone (MIC) configured to receive an external audio signal when the apparatus 500 is in an operation mode, such as a call mode, a recording mode, and a voice recognition mode. The received audio signal may be further stored in the memory 504 or transmitted via the communication component 516. In some embodiments, the audio component 510 further includes a speaker to output audio signals.

The I/O interface 512 provides an interface between the processing component 502 and peripheral interface modules, such as a keyboard, a click wheel, buttons, and the like. The buttons may include, but are not limited to, a home button, a volume button, a starting button, and a locking button.

The sensor component 514 includes one or more sensors to provide status assessments of various aspects of the apparatus 500. For instance, the sensor component 514 may detect an opened/closed status of the apparatus 500, relative positioning of components, e.g., the display and the keypad, of the apparatus 500, a change in position of the apparatus 500 or a component of the apparatus 500, a presence or absence of user contact with the apparatus 500, an orientation or an acceleration/deceleration of the apparatus 500, and a change in temperature of the apparatus 500. The sensor component 514 may include a proximity sensor configured to detect the presence of nearby objects without any physical contact. The sensor component 514 may also include a light sensor, such as a CMOS or CCD image sensor, for use in imaging applications. The sensor component 514 may also include a fingerprtin recognition sensor, configred to recognize fingerprtins. In some embodiments, the sensor component 514 may also include an accelerometer sensor, a gyroscope sensor, a magnetic sensor, a pressure sensor, or a temperature sensor.

The communication component 516 is configured to facilitate communication, wired or wirelessly, between the apparatus 500 and other devices. The apparatus 500 can access a wireless network based on a communication standard, such as WiFi, 2G, or 3G, or a combination thereof. In one exemplary embodiment, the communication component 516 receives a broadcast signal or broadcast associated information from an external broadcast management system via a broadcast channel. In one exemplary embodiment, the communication component 516 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 500 may be implemented with one or more application specific integrated circuits (ASICs), digital signal processors (DSPs), digital signal processing devices (DSPD), programmable logic devices (PLDs), field programmable gate arrays (FPGA), controllers, micro-controllers, microprocessors, or other electronic components, for performing the above described methods.

In exemplary embodiments, there is also provided a non-transitory computer-readable storage medium including instructions, such as memory 504 including instructions, which is executed by the processor 518 in the apparatus 500, for performing the above-described methods. For example, the non-transitory computer-readable storage medium may be a ROM, a Radom Access Memory (RAM), a CD-ROM, a magnetic tape, a floppy disc, an optical data storage device, and the like.

Where functional modules are referred to in apparatus embodiments for carrying out various steps of the described method(s) it will be understood that these modules may be implemented in hardware, in software, or a combination of the two. When implemented in hardware, the modules may be implemented as one or more hardware modules, such as one or more application specific integrated circuits. When implemented in software, the modules may be implemented as one or more computer programs that are executed on one or more processors.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only, with a true scope of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A fingerprint recognition method, for an electronic device comprising a liquid crystal display screen on which fingerprint recognition sensors and light sensors are distributed, the method comprising:
acquiring (101) a fingerprint recognition command triggered by fingers of a user;
determining (102) a shielding region consisting of positions of respective light sensors shielded by the fingers after receiving the fingerprint recognition command;
selecting (103) a subgroup of the fingerprint recognition sensors according to the shielding region; and
controlling (104) the subgroup of fingerprint recognition sensors to recognize fingerprints of the fingers;
wherein the determining a shielding region consisting of positions of respective light sensors shielded by the fingers after receiving the fingerprint recognition command comprises:
determining respective light sensors of which measured brightness values are smaller than a preset threshold value after receiving the fingerprint recognition command; and
determining a region consisting of the positions of respective light sensors as the shielding region.

2. The method according to claim 1, **characterized by** further comprising:
detecting whether the light sensors are shielded by the fingers according to the shielding region; and
triggering to execute the step of selecting a subgroup of the fingerprint recognition sensors according to the shielding region when detecting that the light sensors are shielded by the fingers according to the shielding region.

3. The method according to any preceding claim, **characterized in that** the selecting a subgroup of the fingerprint recognition sensors according to the shielding region comprises:
determining respective fingerprint recognition sensors distributed in the shielding region; or,
determining a column number and a row number covered by the shielding region when the fingerprint recognition sensors are in array distribution on the display screen, generating a rectangular recognition region by taking the column number as length and the row number as width, and determining respective fingerprint recognition sensors distributed in the recognition region.

4. The method according to any one of claims 1-3, **characterized in that** the controlling the selected subgroup of fingerprint recognition sensors to recognize fingerprints of the fingers comprises:
controlling the subgroup of fingerprint recognition sensors to be electrically connected with corresponding data lines; and
outputting fingerprint data collected by the subgroup of fingerprint recognition sensors by the data lines.

5. The method according to claim 4, **characterized in that** the controlling the subgroup of fingerprint recognition sensors to be electrically connected with corresponding data lines comprises:
initializing all fingerprint recognition sensors, and controlling the subgroup of fingerprint recognition sensors to be electrically connected with corresponding data lines by enabling lines, wherein each fingerprint recognition sensor is electrically connected with a corresponding enabling line.

6. A fingerprint recognition apparatus, used in an electronic device comprising a liquid crystal display screen on which fingerprint recognition sensors and light sensors are distributed, the apparatus comprising:
a command receiving module (310) configured to acquire a fingerprint recognition command triggered by fingers of a user;
a region determining module (320) configured to determine a shielding region consisting of positions of respective light sensors shielded by the fingers after the command receiving module receives the fingerprint recognition command;
a sensor selecting module (103) configured to select a subgroup of the fingerprint recognition sensors according to the shielding region determined by the region determining module; and
a fingerprint recognition module (340) configured to control the subgroup of fingerprint recognition sensors selected by the sensor selecting module to recognize fingerprints of the fingers;
wherein the region determining module includes:
a first determining sub-module configured to determine respective light sensors of which measured brightness values are smaller than a preset threshold value after receiving the fingerprint recognition command; and
a second determining sub-module configured to determine a region consisting of the positions of respective light sensors as the shielding region.

7. The apparatus according to claim 6, **characterized by** further comprising:
a region detecting module configured to detect whether the light sensors are shielded by the fingers according to the shielding region; and
an operation triggering module configured to trigger to execute the step of selecting a subgroup of the fingerprint recognition sensors according to the shielding region when the region detecting module detects that the light sensors are shielded by the fingers according to the shielding region.

8. The apparatus according to any of claims 6 or 7, **characterized in that** the sensor selecting module includes:
a first selecting sub-module configured to determine respective fingerprint recognition sensors distributed in the shielding region; or,
a second selecting sub-module configured to determine a column number and a row number covered by the shielding region when the fingerprint recognition sensors are in array distribution on the display screen, generate a rectangular recognition region by taking the column number as length and the row number as width, and determine respective fingerprint recognition sensors distributed in the recognition region.

9. The apparatus according to any one of claims 6 to 8, **characterized in that** the fingerprint recognition module includes:
a connecting control sub-module configured to control the subgroup of fingerprint recognition sensors to be electrically connected with corresponding data lines; and
a fingerprint output sub-module configured to output fingerprint data collected by the subgroup of fingerprint recognition sensors by the data lines.

10. The apparatus according to claim 9, **characterized in that** the connecting control sub-module is further configured to:
initialize all fingerprint recognition sensors, and control the subgroup of fingerprint recognition sensors to be electrically connected with corresponding data lines by enabling lines, wherein each fingerprint recognition sensor is electrically connected with a corresponding enabling line.

11. A computer program including instructions for executing the steps of a fingerprint recognition method according to any of claims 1 to 5 when said program is executed by a computer.

12. A recording medium readable by a computer and having recorded thereon a computer program including instructions that when executed cause a computer to carry out the steps of a fingerprint recognition method according to any one of claims 1 to 5.

## Patentansprüche

1. Fingerabdruckerkennungsverfahren für eine elektronische Vorrichtung, die einen Flüssigkristallanzeige-Bildschirm aufweist, auf dem Fingerdruckerkennungssensoren und Lichtsensoren verteilt sind, wobei das Verfahren Folgendes aufweist:
Erfassen (101) eines durch Finger eines Benutzers ausgelösten Fingerabdruckerkennungsbefehls;
Bestimmen (102) eines Abschirmungsbereichs, der aus Positionen jeweiliger Lichtsensoren besteht, die von den Fingern abgeschirmt werden, nach Empfangen des Fingerabdruckerkennungsbefehls;
Auswählen (103) einer Teilgruppe der Fingerabdruckerkennungssensoren gemäß dem Abschirmungsbereich; und
Steuern (104) der Teilgruppe von Fingerabdruckerkennungssensoren zum Erkennen von Fingerabdrücken der Finger;
wobei das Bestimmen eines Abschirmungsbereichs, der aus Positionen jeweiliger Lichtsensoren besteht, die von den Fingern abgeschirmt werden, nach Empfangen des Fingerabdruckerkennungsbefehls Folgendes aufweist:
Bestimmen jeweiliger Lichtsensoren, bei denen gemessene Helligkeitswerte kleiner als ein voreingestellter Schwellenwert sind, nach Empfangen des Fingerabdruckerkennungsbefehls; und
Bestimmen eines Bereichs, der aus den Positionen jeweiliger Lichtsensoren besteht, als den Abschirmungsbereich.

2. Verfahren nach Anspruch 1, **dadurch gekennzeichnet, dass** es ferner Folgendes aufweist:
Erkennen, ob die Lichtsensoren gemäß dem Abschirmungsbereich von den Fingern abgeschirmt werden; und
Auslösen zum Ausführen des Schritts des Auswählens einer Teilgruppe der Fingerabdruckerkennungssensoren gemäß dem Abschirmungsbereich bei Erkennen, dass die Lichtsensoren gemäß dem Abschirmungsbereich von den Fingern abgeschirmt werden.

3. Verfahren nach einem der vorhergehenden Ansprüche, **dadurch gekennzeichnet, dass** das Auswählen einer Teilgruppe der Fingerabdruckerkennungssensoren gemäß dem Abschirmungsbereich Folgendes aufweist:
Bestimmen jeweiliger in dem Abschirmungsbereich verteilter Fingerabdruckerkennungssensoren; oder
Bestimmen einer Spaltenzahl und einer Reihenzahl, die von dem Abschirmungsbereich abgedeckt werden, wenn die Fingerabdruckerkennungssensoren in einer Array-Verteilung auf dem Bildschirm sind, Erzeugen eines rechteckigen Erkennungsbereichs durch Nehmen der Spaltenzahl als Länge und der Reihenzahl als Breite und Bestimmen jeweiliger in dem Erkennungsbereich verteilter Fingerabdruckerkennungssensoren.

4. Verfahren nach einem der Ansprüche 1 bis 3, **dadurch gekennzeichnet, dass** das Steuern der ausgewählten Teilgruppe von Fingerabdruckerkennungssensoren zum Erkennen von Fingerabdrücken der Finger Folgendes aufweist:
Steuern der Teilgruppe von Fingerabdruckerkennungssensoren, so dass sie elektrisch mit entsprechenden Datenleitungen verbunden werden; und
Ausgeben von Fingerabdruckdaten, die von der Teilgruppe von Fingerabdruckerkennungssensoren erfasst wurden, durch die Datenleitungen.

5. Verfahren nach Anspruch 4, **dadurch gekennzeichnet, dass** das Steuern der Teilgruppe von Fingerabdruckerkennungssensoren, so dass sie elektrisch mit entsprechenden Datenleitungen verbunden werden, Folgendes aufweist:
Initialisieren aller Fingerabdruckerkennungssensoren und Steuern der Teilgruppe von Fingerabdruckerkennungssensoren, so dass sie elektrisch mit entsprechenden Datenleitungen verbunden werden, durch Freigabeleitungen, wobei jeder Fingerabdruckerkennungssensor elektrisch mit einer entsprechenden Freigabeleitung verbunden ist.

6. Fingerabdruckerkennungsvorrichtung, die in einer elektronischen Vorrichtung verwendet wird, die einen Flüssigkristallanzeige-Bildschirm aufweist, auf dem Fingerdruckerkennungssensoren und Lichtsensoren verteilt sind, wobei die Vorrichtung Folgendes aufweist:
ein Befehlsempfangsmodul (310), das zum Erfassen eines durch Finger eines Benutzers ausgelösten Fingerabdruckerkennungsbefehls gestaltet ist;
ein Bereichsbestimmungsmodul (320), das um Bestimmen eines Abschirmungsbereichs, der aus Positionen jeweiliger Lichtsensoren besteht, die von den Fingern abgeschirmt werden, nach Empfangen des Fingerabdruckerkennungsbefehls durch das Befehlsempfangsmodul;
ein Sensorauswahlmodul (103), das zum Auswählen einer Teilgruppe der Fingerabdruckerkennungssensoren gemäß dem von dem Bereichsbestimmungsmodul bestimmten Abschirmungsbereich gestaltet ist; und
ein Fingerabdruckerkennungsmodul (340), das zum Steuern der durch das Sensorauswahlmodul ausgewählten Teilgruppe von Fingerabdruckerkennungssensoren zum Erkennen von Fingerabdrücken der Finger gestaltet ist;
wobei das Bereichsbestimmungsmodul Folgendes beinhaltet:
ein erstes Bestimmungsuntermodul, das zum Bestimmen jeweiliger Lichtsensoren, bei denen gemessene Helligkeitswerte kleiner als ein voreingestellter Schwellenwert sind, nach Empfangen des Fingerabdruckerkennungsbefehls gestaltet ist; und
ein zweites Bestimmungsuntermodul, das zum Bestimmen eines Bereichs, der aus den Positionen jeweiliger Lichtsensoren besteht, als den Abschirmungsbereich gestaltet ist.

7. Vorrichtung nach Anspruch 6, **dadurch gekennzeichnet, dass** sie ferner Folgendes aufweist:
ein Bereichserkennungsmodul, das zum Erkennen, ob die Lichtsensoren gemäß dem Abschirmungsbereich von den Fingern abgeschirmt werden; und
ein Operationsauslösungsmodul, das zum Auslösen zum Ausführen des Schritts des Auswählens einer Teilgruppe der Fingerabdruckerkennungssensoren gemäß dem Abschirmungsbereich bei Erkennen durch das Bereichserkennungsmodul, dass die Lichtsensoren gemäß dem Abschirmungsbereich von den Fingern abgeschirmt werden, gestaltet ist.

8. Vorrichtung nach einem der Ansprüche 6 oder 7, **dadurch gekennzeichnet, dass** das Sensorauswahlmodul Folgendes beinhaltet:
ein erstes Auswahluntermodul, das zum Bestimmen jeweiliger in dem Abschirmungsbereich verteilter Fingerabdruckerkennungssensoren gestaltet ist; oder
ein zweites Auswahluntermodul, das zum Bestimmen einer Spaltenzahl und einer Reihenzahl, die von dem Abschirmungsbereich abgedeckt werden, wenn die Fingerabdruckerkennungssensoren in einer Array-Verteilung auf dem Bildschirm sind, Erzeugen eines rechteckigen Erkennungsbereichs durch Nehmen der Spaltenzahl als Länge und der Reihenzahl als Breite und Bestimmen jeweiliger in dem Erkennungsbereich verteilter Fingerabdruckerkennungssensoren gestaltet ist.

9. Vorrichtung nach einem der Ansprüche 6 bis 8, **dadurch gekennzeichnet, dass** das Fingerabdruckerkennungsmodul Folgendes beinhaltet:
ein Verbindungssteuerungsuntermodul, das zum Steuern der Teilgruppe von Fingerabdruckerkennungssensoren, so dass sie elektrisch mit entsprechenden Datenleitungen verbunden werden, gestaltet ist; und
ein Fingerabdruckausgabemodul, das zum Ausgeben von Fingerabdruckdaten, die von der Teilgruppe von Fingerabdruckerkennungssensoren erfasst wurden, durch die Datenleitungen gestaltet ist.

10. Vorrichtung nach Anspruch 9, **dadurch gekennzeichnet, dass** das Verbindungssteuerungsuntermodul ferner gestaltet ist zum:
Initialisieren aller Fingerabdruckerkennungssensoren und Steuern der Teilgruppe von Fingerabdruckerkennungssensoren, so dass sie elektrisch mit entsprechenden Datenleitungen verbunden werden, durch Freigabeleitungen, wobei jeder Fingerabdruckerkennungssensor elektrisch mit einer entsprechenden Freigabeleitung verbunden ist.

11. Computerprogramm, das Anweisungen zum Ausführen der Schritte eines Fingerabdruckerkennungsverfahrens nach einem der Ansprüche 1 bis 5 bei Ausführung des genannten Programms durch einen Computer beinhaltet.

12. Aufzeichnungsmedium, das durch einen Computer lesbar ist und auf dem ein Computerprogramm aufgezeichnet ist, das Anweisungen beinhaltet, die bei Ausführung einen Computer zum Durchführen der Schritte eines Fingerabdruckerkennungsverfahrens nach einem der Ansprüche 1 bis 5 veranlassen.

## Revendications

1. Procédé de reconnaissance d'empreintes digitales pour un dispositif électronique comprenant un écran d'affichage à cristaux liquides sur lequel des capteurs de reconnaissance d'empreintes digitales et des capteurs de lumière sont répartis, le procédé comprenant :
acquérir (101) une commande de reconnaissance d'empreintes digitales déclenchée par les doigts d'un utilisateur ;
déterminer (102) une région de protection consistant en des positions de capteurs de lumière respectifs protégés par les doigts après avoir reçu la commande de reconnaissance d'empreintes digitales ;
sélectionner (103) un sous-groupe des capteurs de reconnaissance d'empreintes digitales conformément à la région de protection ; et
commander (104) au sous-groupe de capteurs de reconnaissance d'empreintes digitales de reconnaître les empreintes digitales des doigts ;
dans lequel le fait de déterminer une région de protection consistant en des positions de capteurs de lumière respectifs protégés par les doigts après avoir reçu la commande de reconnaissance d'empreintes digitales comprend :
déterminer des capteurs de lumière respectifs dont des valeurs mesurées d'intensité de lumière sont plus petites qu'une valeur seuil préréglée après avoir reçu la commande de reconnaissance d'empreintes digitales ; et
déterminer une région consistant en les positions des capteurs de lumière respectifs en tant que région de protection.

2. Procédé selon la revendication 1, caractérisé en comprenant en outre :
détecter si les capteurs de lumière sont protégés par les doigts conformément à la région de protection ; et
déclencher l'exécution de l'étape consistant à sélectionner un sous-groupe de capteurs de reconnaissance d'empreintes digitales conformément à la région de protection en détectant que les capteurs de lumière sont protégés par les doigts conformément à la région de protection.

3. Procédé selon l'une quelconque des revendications précédentes, **caractérisé en ce que** le fait de sélectionner un sous-groupe des capteurs de reconnaissance d'empreintes digitales conformément à la région de protection, comprend :
déterminer des capteurs de reconnaissance d'empreintes digitales respectifs répartis dans la région de protection ; ou bien
déterminer un nombre de colonnes et un nombre de rangées couverts par la région de protection lorsque les capteurs de reconnaissance d'empreintes digitales sont répartis en matrice sur l'écran d'affichage, générer une région de reconnaissance rectangulaire en prenant le nombre de colonnes comme longueur et le nombre de rangées comme largeur, et déterminer des capteurs de reconnaissance d'empreintes digitales respectifs répartis dans la région de reconnaissance.

4. Procédé selon l'une quelconque des revendications 1-3, **caractérisé en ce que** le fait de commander au sous-groupe sélectionné de capteurs de reconnaissance d'empreintes digitales de reconnaître les empreintes digitales des doigts, comprend :
commander au sous-groupe de capteurs de reconnaissance d'empreintes digitales de se connecter électriquement à des lignes de données correspondantes ; et
sortir les données des empreintes digitales recueillies par le sous-groupe de capteurs de reconnaissance d'empreintes digitales par les lignes de données.

5. Procédé selon la revendication 4, **caractérisé en ce que** le fait de commander au sous-groupe de capteurs de reconnaissance d'empreintes digitales de se connecter électriquement à des lignes de données correspondantes, comprend :
initialiser tous les capteurs de reconnaissance d'empreintes digitales, et commander au sous-groupe de capteurs de reconnaissance d'empreintes digitales de se connecter électriquement à des lignes de données correspondantes en validant les lignes, dans lequel chaque capteur de reconnaissance d'empreintes digitales est connecté électriquement à une ligne de validation correspondante.

6. Appareil de reconnaissance d'empreintes digitales, utilisé dans un dispositif électronique comprenant un écran d'affichage à cristaux liquides sur lequel des capteurs de reconnaissance d'empreintes digitales et des capteurs de lumière sont répartis, l'appareil comprenant :
un module de réception de commande (310) configuré pour recevoir une commande de reconnaissance d'empreintes digitales déclenchée par les doigts d'un utilisateur ;
un module de détermination de région (320) configurée pour déterminer une région de protection consistant en des positions de capteurs de lumière respectifs protégés par les doigts après que le module de réception de commande a reçu la commande de reconnaissance d'empreintes digitales ;
un module de sélection de capteurs (103) configuré pour sélectionner un sous-groupe de capteurs de reconnaissance d'empreintes digitales conformément à la région de protection déterminée par la module de détermination ; et
un module de reconnaissance d'empreintes digitales (340) configuré pour commander au sous-groupe de capteurs de reconnaissance d'empreintes digitales sélectionnés par le module de sélection de capteurs de reconnaître les empreintes digitales des doigts ;
dans lequel le module de détermination de région comprend :
un premier sous-module de détermination configuré pour déterminer des capteurs de lumière respectifs dont les valeurs mesurées d'intensité de lumière sont plus petites qu'une valeur seuil préréglée après avoir reçu la commande de reconnaissance d'empreintes digitales ; et
un deuxième sous-module de détermination configuré pour déterminer une région consistant en les positions des capteurs de lumière respectifs comme la région de protection.

7. Appareil selon la revendication 6, caractérisé en comprenant en outre :
un module de détection de région configuré pour détecter si les capteurs de lumière sont protégés par les doigts conformément à la région de protection ; et
un module de déclenchement d'opération configuré pour déclencher l'exécution de l'étape consistant à sélectionner un sous-groupe de capteurs de reconnaissance d'empreintes digitales conformément à la région de protection lorsque le module de détection de région détecte que les capteurs de lumière sont protégés par les doigts conformément à la région de protection.

8. Appareil selon l'une quelconque des revendications 6 ou 7, **caractérisé en ce que** le module de sélection de capteurs comprend :
un premier sous-module de sélection configuré pour déterminer des capteurs de reconnaissance d'empreintes digitales respectifs répartis dans la région de protection ; ou bien
un deuxième sous-module de sélection configuré pour déterminer un nombre de colonnes et un nombre de rangées couverts par la région de protection lorsque les capteurs de reconnaissance d'empreintes digitales sont répartis en matrice sur l'écran d'affichage, générer une région de reconnaissance rectangulaire en prenant le nombre de colonnes comme longueur et le nombre de rangées comme largeur, et déterminer des capteurs de reconnaissance d'empreintes digitales respectifs répartis dans la région de reconnaissance.

9. Appareil selon l'une quelconque des revendications 6 à 8, **caractérisé en ce que** le module de reconnaissance d'empreintes digitales comprend :
un sous-module de commande de connexion configuré pour commander au sous-groupe de capteurs de reconnaissance d'empreintes digitales de se connecter électriquement à des lignes de données correspondantes ; et
un sous-module de sortie d'empreintes digitales configuré pour sortir les données d'empreintes digitales recueillies par le sous-groupe de capteurs de reconnaissance d'empreintes digitales par les lignes de données.

10. Appareil selon la revendication 9, **caractérisé en ce que** le sous-module de commande de connexion est configuré en outre pour :
initialiser tous les capteurs de reconnaissance d'empreintes digitales, et commander au sous-groupe de capteurs de reconnaissance d'empreintes digitales de se connecter électriquement à des lignes de données correspondantes par des lignes de validation, dans lequel chaque capteur de reconnaissance d'empreintes digitales est connecté électriquement à une ligne de validation correspondante.

11. Programme informatique comprenant des instructions pour exécuter les étapes d'un procédé de reconnaissance d'empreintes digitales selon l'une quelconque des revendications 1 à 5, lorsque ledit programme est exécuté par un ordinateur.

12. Support d'enregistrement lisible par un ordinateur et ayant un programme informatique enregistré dessus comprenant des instructions qui lorsque exécutées font qu'un ordinateur mette en œuvre les étapes d'un procédé de reconnaissance d'empreintes digitales selon l'une quelconque des revendications 1 à 5.
